# FASCICULE DE BREVET EUROPEEN

(11) **EP 1 187 982 B1**
(45) Date de publication et mention de la délivrance du brevet: **01.06.2005**
(21) Numéro de dépôt: 00992092.7
(22) Date de dépôt: 20.12.2000
(51) Int. Cl.: F02M 57/06

(54) **DISPOSITIF D'INJECTION DE CARBURANT DANS UN MOTEUR A COMBUSTION INTERNE**
VORRICHTUNG ZUM EINSPRITZEN EINES BRENNSTOFFS IN DIE BRENNKAMMER EINES BRENNKRAFTMASCHINENZYLINDERS
DEVICE FOR INJECTING A FUEL INTO A COMBUSTION CHAMBER OF AN INTERNAL COMBUSTION ENGINE CYLINDER

(30) Priorité: 30.12.1999 LU 90498
(43) Date de publication de la demande: 20.03.2002
(73) Titulaire: Art & S, Automotive Technology & Style Holding S.A., 1150 Luxembourg (LU)
(72) Inventeur: ARTIOLI, Romano, L-2326 Luxembourg (LU)
(74) Mandataire: Van Malderen, Michel
(86) Numéro de dépôt international: PCT/EP2000/013284
(87) Numéro de publication internationale: WO 2001/050013

(56) Documents cités:
- GB-A- 637 584
- GB-A- 2 311 327
- US-A- 1 373 498
- US-A- 5 329 908

## Description

La présente invention concerne le domaine technique des moteurs thermiques à combustion interne et elle vise, plus précisément, les systèmes d'injection directe d'un carburant à l'intérieur d'une chambre de combustion d'un cylindre d'un moteur à combustion interne à allumage commandé ou diesel.

De manière classique, un système d'injection directe d'un carburant comporte un injecteur commandé de carburant apte à assurer l'amenée du carburant directement à l'intérieur de la chambre de combustion d'un cylindre, par l'intermédiaire d'un injecteur plus ou moins complexe pour résister au front de flamme et directement à la combustion (voir GB-A-637 584). Or, il est apparu avantageux d'utiliser dans les systèmes d'injection directe, le gaz naturel en tant que carburant de remplacement.

L'intérêt de l'utilisation du gaz naturel dans les moteurs à allumage commandé, est bien connu sur le plan des émissions globales de polluants et d'oxyde de carbone. La combustion même partielle du gaz naturel ne conduit pas à la production en quantités significatives, de composés chimiques toxiques ou de particules charbonneuses. Par ailleurs, le gaz naturel présente un indice d'octane très élevé permettant d'utiliser le gaz naturel sur tous les moteurs à allumage commandé aspirés ou suralimentés sans aucune modification. L'utilisation du gaz naturel permet ainsi d'augmenter significativement le taux de compression ou le taux de suralimentation pour une protection au cliquetis ou au pré-allumage bien supérieure à l'essence ou même aux autres gaz liquéfiés.

Il apparaît ainsi intéressant de remplacer l'alimentation du moteur en essence, ou gaz liquéfié par un système d'injection directe de gaz naturel sans diminuer la fiabilité du moteur tout en bénéficiant de l'augmentation du taux de compression induit pour améliorer le rendement et la puissance du moteur.

Dans l'état de la technique, il existe de nombreux systèmes d'injection directe d'un gaz naturel destiné à être monté sur un moteur thermique (voir US-A-5 329 908). Toutefois, les solutions techniques connues imposent d'apporter des modifications importantes sur la culasse du moteur délimitant la chambre de combustion. De plus, de tels systèmes d'injection présentent généralement une conception relativement complexe présentant un prix élevé.

Un objet de l'invention est donc de proposer un dispositif d'injection directe d'un carburant différent de celui initialement prévu tout en étant conçu pour être monté en lieu et place d'une bougie d'allumage ou de l'injecteur d'un moteur diesel, afin de ne pas apporter de modifications substantielles au moteur.

Pour atteindre un tel objectif, le dispositif selon l'invention comporte :
- un support adaptateur destiné à être monté sur la culasse du moteur, le support adaptateur étant aménagé pour délimiter, d'une part, au moins partiellement un circuit d'injection pour le carburant et, d'autre part, un passage central pour le montage de la bougie d'allumage,
- et au moins un injecteur commandé pour le carburant et un injecteur commandé pour un gaz de rinçage, les injecteurs commandés étant montés à l'extérieur de la chambre de combustion, de manière que leurs sorties se trouvent reliées à l'entrée du circuit d'injection.

Le dispositif selon l'invention permet aussi d'assurer l'injection d'un carburant directement à l'intérieur d'une chambre de combustion d'un cylindre d'un moteur à combustion interne à allumage commandé ou diesel en utilisant des injecteurs classiques habituellement mis en oeuvre en injection indirecte.

Un objet de l'invention est de proposer également une technique permettant d'assurer une injection complète du carburant à l'intérieur de la chambre de combustion d'un cylindre d'un moteur thermique.

Pour atteindre un tel objectif, le dispositif selon l'invention comporte des moyens de commande permettant, pour chaque temps de compression, et après la fermeture de l'orifice d'admission d'air, de piloter :
- l'injecteur du carburant pour injecter du carburant à l'intérieur de la chambre de combustion et à travers le circuit d'injection, de manière à laisser subsister entre la fin de l'injection du carburant et le point d'allumage, un intervalle de temps déterminé,
- l'injecteur du gaz de rinçage pour assurer au moins pendant l'intervalle de temps, l'injection d'un gaz de rinçage à travers le circuit d'injection pour chasser le carburant et l'amener dans la chambre de combustion, en vue de sa combustion dans ladite chambre.

Le dispositif d'injection directe selon l'invention est adapté pour, d'une part, assurer une combustion complète du carburant à l'intérieur de la chambre de combustion et, d'autre part, injecter un carburant différent de celui initialement prévu tout en n'apportant pas de modifications majeures sur un tel moteur.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une vue en coupe-élévation schématique d'un premier exemple de réalisation d'un dispositif d'injection conforme à l'invention.
Les **fig. 2** et **3** sont des vues illustrant d'autres variantes de réalisation d'un dispositif de contrôle conforme à l'invention.
La **fig. 4** est une vue de dessous prise sensiblement selon les lignes IV-IV de la **fig. 3.**
Les **fig. 5** et **6** sont des vues schématiques montrant d'autres exemples de réalisation du dispositif d'injection conforme à l'invention.

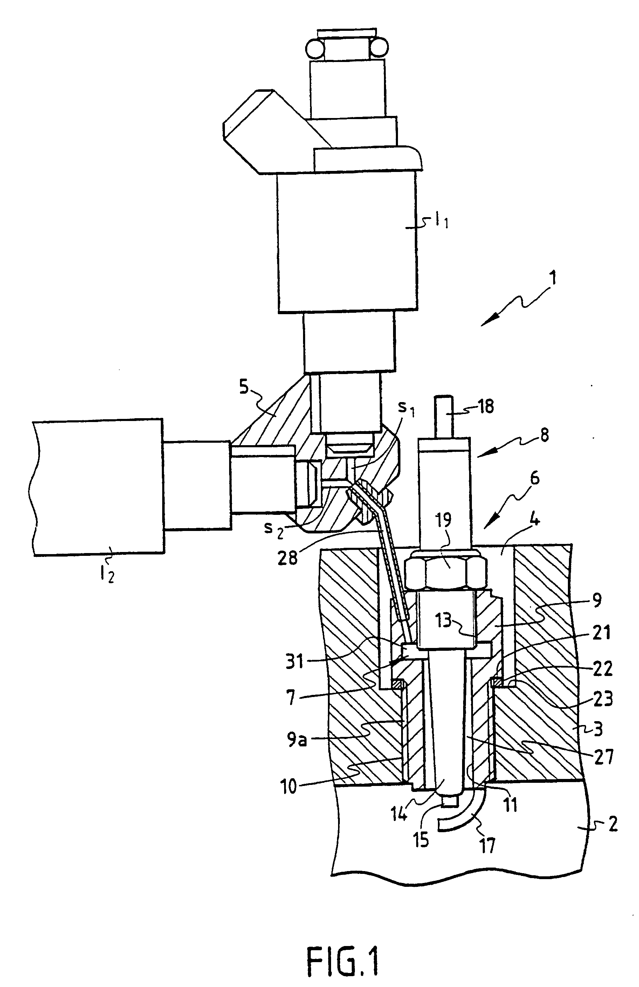

La **fig. 1** illustre un exemple de réalisation d'un dispositif **1** d'injection directe d'un carburant à l'intérieur d'une chambre de combustion **2** affectée à un cylindre non représenté d'un moteur à combustion interne et à allumage commandé ou diesel. La chambre de combustion **2,** qui est représenté que partiellement car elle ne fait pas partie de l'objet de l'invention, est équipée classiquement d'au moins un orifice d'admission d'air. Dans le cas d'un moteur 4 temps, cet orifice d'admission d'air constitue une soupape d'admission qui est associée à une soupape d'échappement, non représentée. La chambre de combustion **2** est fermée classiquement par l'intermédiaire d'une culasse **3**. De manière classique, la culasse **3** comporte, pour chaque cylindre, un puits d'accès **4** communiquant avec la chambre de combustion **2**.

Conformément à l'invention, le dispositif **1** comporte au moins un injecteur commandé **I**_{**1**} pour un carburant et un injecteur commandé **I**_{**2**} pour un gaz de rinçage. Dans l'exemple de réalisation préféré décrit ci-après, le carburant utilisé est du gaz naturel, tandis que le gaz de rinçage est de l'air ou éventuellement des gaz d'échappement. De préférence, les injecteurs **I**_{**1**}**, I**_{**2**} sont des injecteurs électromagnétiques classiquement commercialisés et utilisés en injection indirecte. Les injecteurs commandés **I**_{**1**} et **I**_{**2**} sont montés à l'extérieur de la chambre de combustion **2** sur un porte-injecteur **5**. Le dispositif **1** comporte un bloc injecteur - porte bougie **6** pourvu d'un circuit d'injection **7** adapté pour assurer l'amenée d'au moins le carburant à l'intérieur de la chambre de combustion **2**. Le circuit d'injection **7** communique, d'un côté, avec les sorties **s**_{**1**}**, s**_{**2**} des injecteurs **I**_{**1**}**, I**_{**2**} et, de J'autre côté, avec la chambre de combustion **2**. Le bloc injecteur - porte bougie **6** comporte également une bougie d'allumage **8**.

Selon une caractéristique avantageuse de réalisation, le bloc injecteur - porte bougie **6** est réalisé pour être monté sur la culasse **3** du moteur sans y apporter de modifications substantielles. Ainsi, le bloc injecteur - porte bougie **6** comporte un support adaptateur **9** destiné à être monté sur la culasse **3** à l'intérieur du puits **4**. Selon un exemple avantageux de réalisation, le support adaptateur **9** présente une forme générale tubulaire et comporte extérieurement et, par exemple à son extrémité inférieure, une partie filetée de montage **9a** destinée à coopérer avec un taraudage complémentaire **10** réalisé sur le puits **4** de la culasse. Selon une forme préférée de réalisation, la partie filetée 9a coopère avec le taraudage **10** correspondant au taraudage pour le vissage d'une bougie d'allumage classique. Il doit être compris que le support adaptateur **9** est monté en lieu et place d'une bougie d'allumage classique. Dans le cas du montage du système d'injection **1** selon l'invention sur un moteur du type diesel, le support adaptateur **9** est monté à la place de l'injecteur. Dans ce dernier exemple de réalisation, il n'est pas à exclure que le puits **4** recevant un tel injecteur soit aménagé pour recevoir le support adaptateur **9** conforme à l'invention.

Le support adaptateur **9** comporte un passage central **11** traversant de part en part ledit support et permettant le montage de la bougie d'allumage **8**. Selon une caractéristique préférée de réalisation illustrée plus particulièrement aux **fig. 1** à **3**, le passage central **11** comporte, par exemple à son extrémité supérieure, un taraudage **13** destiné à coopérer avec un filetage réalisé sur la bougie d'allumage **8**. La bougie d'allumage **8** présente, par rapport à une bougie classique, des dimensions diamétrales réduites pour permettre son montage à l'intérieur du support adaptateur **9** qui, dans un exemple préféré de réalisation, prend la place d'une bougie d'allumage classique. La bougie d'allumage **8** présente ainsi un fût d'isolation électrique **14** à l'extrémité duquel dépasse l'électrode centrale **15** qui s'étend dans la chambre de combustion **2**. Selon une forme préférée de réalisation mais non limitative, le support adaptateur **9** est aménagé pour délimiter une électrode de masse **17** s'étendant classiquement en relation de proximité par rapport à l'électrode centrale **15**. Une telle bougie d'allumage **8** comporte, de façon classique, à l'opposé du fût isolant **14**, un embout **18** de raccordement électrique et un écrou de serrage **19** permettant d'assurer le montage de la bougie d'allumage **8** sur le support adaptateur **9**.

Le support adaptateur **9** comporte extérieurement un épaulement **21** surmontant la partie filetée **9a**, de manière à venir en appui, par l'intermédiaire d'un joint d'étanchéité **22**, avec le fond **23** d'un chambrage réalisé dans le puits de montage **4**. Le vissage du support adaptateur **9** sur la culasse **3** permet ainsi d'assurer le montage de la bougie d'allumage **8** et l'étanchéité pour la chambre de combustion **2**.

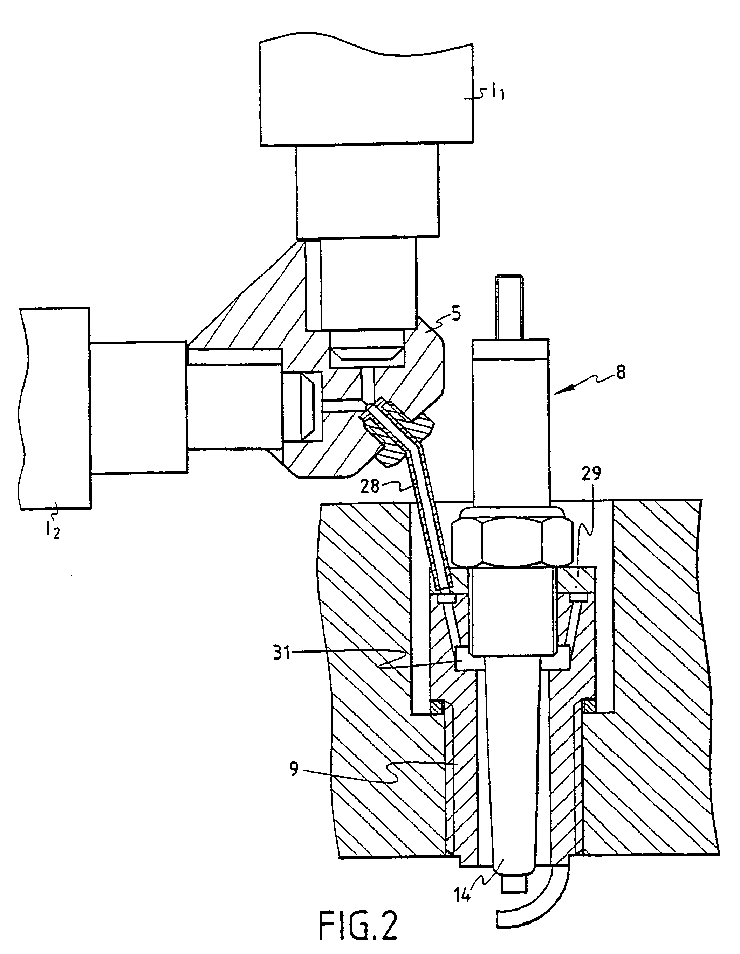

Le support adaptateur **9** est aménagé pour délimiter au moins partiellement, le circuit d'injection **7** pour le carburant. Dans l'exemple de réalisation illustré à la **fig. 1**, le circuit d'injection **7** comporte un circuit interne **27** aménagé dans le support adaptateur **9** et communiquant d'un côté, avec la chambre de combustion **2** et, de l'autre côté, avec une canalisation **28** s'étendant extérieurement à partir du support adaptateur **9**. Cette canalisation **28**, qui est montée de toute manière appropriée sur le porte-injecteur **5** et le support adaptateur **9**, communique avec les sorties **s**_{**1**}**, s**_{**2**} des injecteur **I**_{**1**}**, I**_{**2**}. Cette canalisation **28** constituée par un tube haute pression, forme avec le circuit interne **27**, le circuit d'injection **7** du carburant. Il est à noter que dans un exemple de réalisation illustré plus particulièrement à la **fig. 2**, la canalisation **28** est montée sur un bouchon d'étanchéité **29** interposé entre le support adaptateur **9** et l'écrou de serrage **19** de la bougie d'allumage **8**. Ainsi, le montage de la bougie **8** sur le support adaptateur **9** permet d'assurer l'étanchéité entre la canalisation **28** et le circuit interne **27** aménagé dans le support adaptateur **9**.

Dans l'exemple de réalisation illustré à la **fig. 1**, le circuit interne **27** aménagé dans le support adaptateur **9** est constitué par une chambre annulaire délimitée entre le passage central **11** et le fût isolant **14** de la bougie **8**. Cette chambre annulaire **27** qui débouche dans la chambre de combustion **2** autour de la bougie d'allumage **8**, communique avec un chambrage annulaire **31** réalisé à l'intérieur du support adaptateur **9** pour constituer une chambre de distribution reliée à la canalisation **28**.

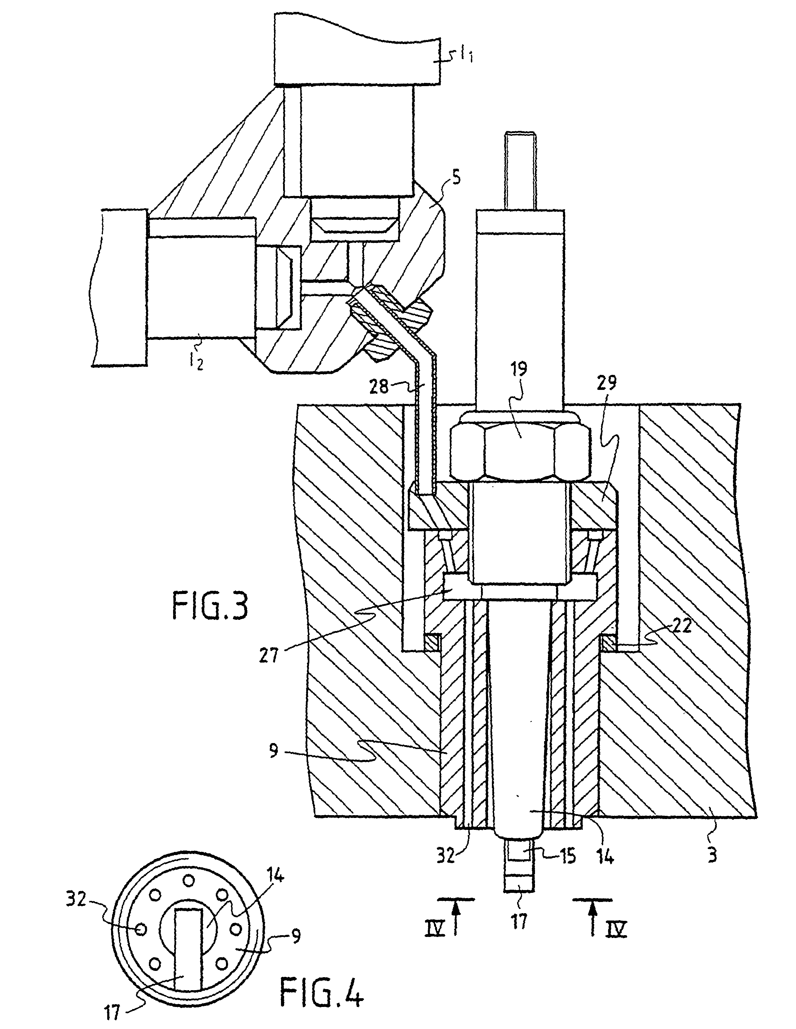

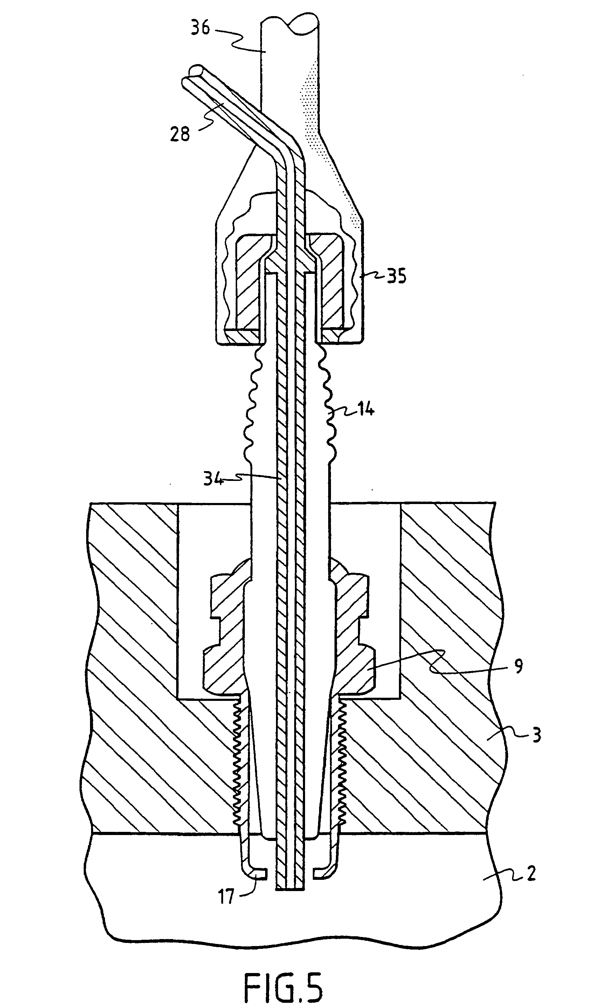

Dans l'exemple illustré plus particulièrement aux **fig. 3** et **4**, le circuit interne **27** du circuit d'injection **7** est constitué par une série de canaux **32** aménagés dans le support adaptateur **9** selon un même rayon et parallèlement les uns aux autres. Ces canaux **32** communiquent, d'un côté, avec la chambre de combustion **2** et, de l'autre côté, avec le chambrage annulaire **31** relié à la canalisation **28**. Les canaux **32** débouchent ainsi sur la face transversale du support adaptateur **9** s'étendant à l'intérieur de la chambre de combustion et se trouvent répartis autour de l'électrode centrale de la bougie **8** permettant une bonne dispersion du carburant avec l'air contenu dans la chambre de combustion **2**.

La **fig. 5** illustre de façon schématique, un autre exemple de réalisation du circuit interne **27** du circuit d'injection. Selon cet exemple, le circuit interne **27** est constitué par un conduit tubulaire **34** débouchant d'un côté, dans la chambre de combustion **2** et communiquant, de l'autre côté, avec la canalisation **28** reliée aux sorties des injecteurs **I**_{**1**}**, I**_{**2**}. Ce conduit tubulaire **34** est relié à une alimentation électrique par tous moyens appropriés pour constituer l'électrode centrale **15** de la bougie **8**. Par exemple, ce conduit ou électrode tubulaire **34** est entouré par le fût d'isolation électrique **14** dont la partie s'étendant à l'opposé de la chambre de combustion **2**, sert de montage à un embout de raccordement **35** d'un câble d'alimentation électrique **36**, assurant la connexion électrique avec le conduit tubulaire **34**. Bien entendu, la canalisation **28** est réalisée en un matériau isolant électriquement. Le fût d'isolation électrique **14** est monté à l'intérieur du support adaptateur **9** qui délimite l'électrode de masse **17**.

Selon une autre caractéristique de l'invention, le dispositif 1 selon l'invention comporte également des moyens de commande non représentés mais connus en soi, permettant de piloter le fonctionnement des injecteurs **I**_{**1**} et **I**_{**2**}, en vue de mettre en oeuvre un procédé de contrôle d'injection du carburant conforme à l'invention.

Ces moyens de commande permettent, pour chaque temps de compression, et après la fermeture d'un orifice d'admission d'air du cylindre, de piloter :
- l'injecteur de carburant **I**_{**1**} pour injecter à l'intérieur de la chambre de combustion **2**, et à travers le circuit d'injection **7**, du carburant de manière à laisser subsister, entre la fin de l'injection du carburant et le point d'allumage, un intervalle de temps déterminé,
- l'injecteur **I**_{**2**} du gaz de rinçage pour assurer au moins pendant l'intervalle de temps, l'injection du gaz de rinçage à travers le circuit d'injection **7** pour chasser le carburant et l'amener dans la chambre de combustion **2**, en vue de sa combustion dans ladite chambre.

Ainsi, pour chaque temps de compression, il est procédé, après la fermeture de l'orifice d'admission du cylindre associé, à la commande de l'injecteur de carburant **I**_{**1**}, de manière à injecter le carburant, selon une durée d'injection déterminée, fonction classiquement de la charge désirée et des différents paramètres habituels de gestion de la combustion. Une telle injection de carburant est terminée quelques dizaines de degrés avant le point d'allumage de manière à laisser subsister, entre la fin de l'injection de carburant et le point d'allumage, un intervalle de temps déterminé pendant lequel l'injecteur de gaz de rinçage **I**_{**2**} délivre une quantité suffisante de gaz de rinçage pour chasser le carburant et l'amener dans la chambre de combustion **2**, en vue de sa combustion lors de l'allumage. Il est ainsi procédé à une sorte de rinçage du circuit d'injection **7** permettant d'éliminer toute trace de carburant et, notamment, de méthane contenu dans le circuit et qui n'arriverait que tardivement dans la chambre pour brûler s'il n'y avait pas la production d'un jet de gaz de rinçage.

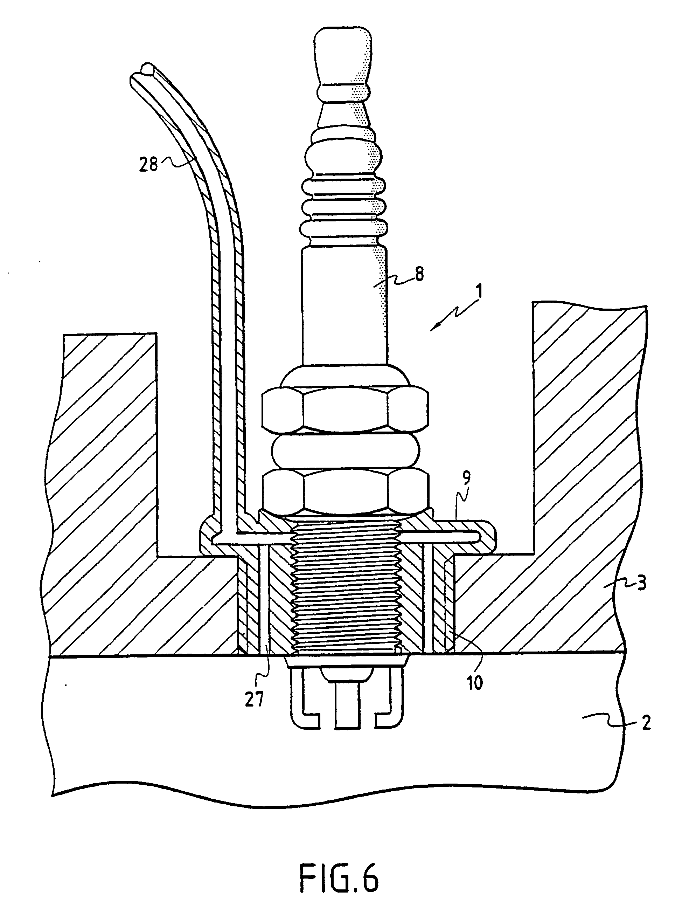

Conformément à la description qui précède, l'objet de l'invention permet d'assurer une combustion complète du carburant délivré par l'injecteur, en envoyant, avant l'allumage, un jet de gaz de rinçage dans le circuit d'injection. Par ailleurs, le dispositif d'injection **1** selon l'invention est conçu pour être monté, sans modifications de la culasse, en lieu et place de la bougie d'allumage sur un moteur à essence ou sur un moteur diesel en lieu et place de l'injecteur, tout en assurant une combustion complète du carburant injecté, susceptible de se trouver dans le circuit d'injection. De plus, un tel dispositif d'injection **1** met en oeuvre des injecteurs classiques et une bougie d'allumage spécifique mais de conception proche de celle connue. A cet égard, il peut être avantageux d'utiliser une bougie d'allumage de 10 mm utilisée en compétition par rapport à une réalisation spécifique de la bougie d'allumage. Ainsi, tel que cela apparaît plus précisément à la **fig. 6**, l'adaptation du dispositif d'injection **1** conforme à l'invention est relativement simple, dans la mesure où il suffit de réaliser un support adaptateur **9** destiné à coopérer avec le taraudage **10** réalisé classiquement sur la culasse **3**. Un tel support adaptateur **9** supporte la bougie **8** et comporte un circuit interne **27** relié à la canalisation **28**.

Le dispositif d'injection **1** permet de changer relativement facilement le type de carburant utilisé par un moteur, par exemple, par du gaz naturel. Toutefois, pour augmenter la polyvalence d'un tel système, il peut être prévu de monter sur le porte-injecteur **5**, un injecteur supplémentaire adapté pour délivrer, par exemple, de l'essence ou du gaz de pétrole liquéfié. Selon cette variante, l'injection du gaz de rinçage, tel que l'air, est effectuée aussi pendant l'injection du carburant pour réaliser un pré-mélange avant l'introduction dans la chambre de combustion **2**. Bien entendu, l'injection du gaz de rinçage est poursuivie après la fin de l'injection du carburant pour chasser ledit carburant du circuit d'injection, comme expliqué ci-dessus. Selon cet exemple de réalisation, le circuit interne d'injection **27** est conforme à celui décrit aux **fig. 3** et **4** mettant en oeuvre des canaux concentriques **32**, de sorte que le mélange carburé ne se trouve pas en contact avec le fût isolant **14** de la bougie d'allumage.

L'invention n'est pas limitée aux exemples décrits et représentés, car diverses modifications peuvent y être apportées sans sortir de son cadre.

## Revendications

1. Dispositif pour contrôler l'injection d'un carburant à l'intérieur d'une chambre de combustion (**2**) d'un cylindre d'un moteur à combustion interne à allumage commandé ou diesel, la chambre de combustion (**2**) étant équipée d'au moins une bougie d'allumage (**8**), **caractérisé en ce qu'**il comporte :
- un support adaptateur (**9**) destiné à être monté sur la culasse (**3**) du moteur, le support adaptateur étant aménagé pour délimiter, d'une part, au moins partiellement un circuit d'injection (**7**) pour le carburant et, d'autre part, un passage central (**11**) pour le montage de la bougie d'allumage (**8**),
- et au moins un injecteur commandé (**I**_{**1**}) pour le carburant et un injecteur commandé (**I**_{**2**}) pour un gaz de rinçage, les injecteurs commandés étant montés à l'extérieur de la chambre de combustion, de manière que leurs sorties (**s**_{**1**}**, s**_{**2**}) se trouvent reliées à l'entrée du circuit d'injection (**7**).

2. Dispositif selon la revendication 1, **caractérisé en ce que** le support adaptateur (**9**) comporte une partie filetée de montage (**9a**) destinée à coopérer avec un taraudage (**10**) aménagé dans la culasse (**3**) et correspondant au taraudage pour le vissage d'une bougie d'allumage classique ou à un taraudage aménagé dans le passage de montage d'un injecteur pour diesel.

3. Dispositif selon la revendication 2, **caractérisé en ce que** le support adaptateur (**9**) comporte une partie filetée (**9a**) surmontée par un épaulement (**21**) destiné à être en appui par l'intermédiaire d'un joint d'étanchéité (**22**), avec le fond (**23**) d'un puits de montage aménagé dans la culasse.

4. Dispositif selon la revendication 1, **caractérisé en ce que** le support adaptateur (**9**) comporte un passage central (**11**), en partie taraudé (**13**), pour permettre le montage par vissage, de la bougie d'allumage (**8**).

5. Dispositif selon la revendication 1, **caractérisé en ce que** le support adaptateur (**9**) comporte, dans sa partie débouchant dans la chambre de combustion, l'électrode de masse (**17**) de la bougie d'allumage (**8**).

6. Dispositif selon la revendication 1, **caractérisé en ce que** le circuit d'injection (**7**) comporte un circuit interne (**27**) aménagé dans le support adaptateur (**9**) et communiquant d'un côté avec la chambre de combustion (**2**) et, de l'autre côté, avec une canalisation (**28**) reliée aux sorties (**s**_{**1**}**, s**_{**2**}) des injecteurs.

7. Dispositif selon la revendication 6, **caractérisé en ce que** le circuit interne (**27**) du circuit d'injection (**7**) est constitué par une chambre annulaire délimitée, entre le passage central (**11**) et la bougie (**8**) et communiquant avec la canalisation (**28**).

8. Dispositif selon la revendication 6, **caractérisé en ce que** le circuit interne (**27**) du circuit d'injection (**7**) est constitué par une série de canaux (**32**) aménagés dans le support adaptateur (**9**) et communiquant d'un côté, avec la chambre de combustion (**2**) et, de l'autre côté, avec une chambre de répartition (**31**) communiquant avec la canalisation (**28**).

9. Dispositif selon la revendication 6, **caractérisé en ce que** le circuit interne (**27**) du circuit d'injection (**7**) est constitué par un conduit tubulaire débouchant dans la chambre de combustion (**2**) et communiquant avec la canalisation (**28**) reliée aux sorties des injecteurs, ledit conduit tubulaire étant relié électriquement pour constituer l'électrode centrale de la bougie d'allumage (**8**).

10. Dispositif selon l'une des revendication 6 à 9, **caractérisé en ce que** la canalisation (**28**) comporte une extrémité montée sur un porte-injecteur (**5**) et communiquant avec les sorties **(s**_{**1**}**, s**_{**2**}) des injecteurs et une extrémité opposée montée sur un bouchon d'étanchéité (**29**) interposé entre le support adaptateur (**9**) et la bougie d'allumage (**8**).

11. Dispositif selon la revendication 10, **caractérisé en ce que** le porte-injecteur (**5**) est équipé d'un injecteur commandé (**I**_{**1**}) pour le carburant du type gaz naturel et/ou d'un injecteur commandé pour de l'essence ou du gaz de pétrole liquéfié.

12. Dispositif selon l'une des revendications 1 à 11, **caractérisé en ce qu'**il comporte des moyens de commande permettant, pour chaque temps de compression, et après la fermeture d'un orifice d'admission d'air, de piloter :
- l'injecteur du carburant pour injecter du carburant à l'intérieur de la chambre de combustion (**2**) et à travers le circuit d'injection, de manière à laisser subsister entre la fin de l'injection du carburant et le point d'allumage, un intervalle de temps déterminé,
- l'injecteur du gaz de rinçage pour assurer au moins pendant l'intervalle de temps, l'injection d'un gaz de rinçage à travers le circuit d'injection (**7**) pour chasser le carburant et l'amener dans la chambre de combustion (**2**), en vue de sa combustion dans ladite chambre.

13. Dispositif selon la revendication 12, **caractérisé en ce que** les moyens de commande permettent de commander l'injection du gaz de rinçage pendant l'injection du carburant pour réaliser un pré-mélange avant l'introduction dans la chambre de combustion (**2**).

14. Dispositif selon la revendication 12, **caractérisé en ce que** l'injecteur de carburant (**I**_{**1**}) injecte, en tant que carburant, du gaz naturel.

15. Dispositif selon la revendication 12, **caractérisé en ce que** l'injecteur de carburant (**I**_{**1**}) injecte, en tant que carburant, de l'essence ou du gaz de pétrole liquéfié.

16. Dispositif selon la revendication 12, **caractérisé en ce que** l'injecteur d'un gaz de rinçage injecte, en tant que gaz de rinçage, de l'air ou des gaz d'échappement.

17. Culasse de moteur thermique, **caractérisée en ce qu'**elle est équipée d'un dispositif de contrôle conforme à l'une des revendications 1 à 16.

## Patentansprüche

1. Vorrichtung, um die Einspritzung eines Kraftstoffs in eine Brennkammer (2) eines Zylinders eines Verbrennungsmotors mit Fremdzündung oder eines Dieselmotors zu steuern, wobei die Brennkammer (2) über mindestens eine Zündkerze (8) verfügt, **dadurch gekennzeichnet, dass** sie Folgendes umfasst:
- Einen Zwischensockel (9), der dazu bestimmt ist, auf dem Zylinderkopf angebracht zu werden, und dessen Ziel ist, einerseits den Einspritzkreislauf (7) für den Kraftstoff zumindest teilweise zu begrenzen und andererseits einen zentralen Durchlass (11) für die Montage der Zündkerze (8) abzugrenzen.
- Mindestens ein gesteuertes Einspritzventil (I₁) für den Kraftstoff und ein gesteuertes Einspritzventil (I₂) für ein Spülgas, wobei die Einspritzventile außerhalb der Brennkammer angebracht sind, so dass ihre Ausgänge (s₁, s₂) mit dem Einlass des Einspritzkreislaufs verbunden sind (7).

2. Vorrichtung gemäß Anspruch 1, **dadurch gekennzeichnet, dass** der Zwischensockel (9) ein Montageteil (9a) umfasst, das mit einem Gewinde versehen ist, um mit einem am Zylinderkopf (3) angebrachten Gewinde (10) verbunden zu werden, das dem Gewinde für die Anbringung einer herkömmlichen Zündkerze oder einem Gewinde in der Montageöffnung entspricht.

3. Vorrichtung gemäß Anspruch 2, **dadurch gekennzeichnet, dass** ein Teil des Zwischensockels (9) mit einem Gewinde versehen ist (9a), über dem sich ein Ansatz (21) befindet, der mittels einer Dichtung (22) am den Boden (23) der Montageöffnung anliegt.

4. Vorrichtung gemäß Anspruch 1, **dadurch gekennzeichnet, dass** der Zwischensockel (9) einen zentralen Durchlass (11) aufweist, der teilweise mit einem Gewinde versehen ist (13) und der das Eindrehen der Zündkerze (8) ermöglicht.

5. Vorrichtung gemäß Anspruch 1, **dadurch gekennzeichnet, dass** der Zwischensockel (9) in dem Teil, der in der Brennkammer endet, die Masseelektrode (17) der Zündkerze (8) enthält.

6. Vorrichtung gemäß Anspruch 1, **dadurch gekennzeichnet, dass** der Einspritzkreislauf (7) einen internen Kreislauf (27) umfasst, der in den Zwischensockel (9) eingebaut ist und auf einer Seite mit der Brennkammer (2) verbunden ist und auf der anderen Seite mit einem mit den Ausgängen (s₁, s₂) der Einspritzungsventile verbundenen Kanal (28).

7. Vorrichtung gemäß Anspruch 6, **dadurch gekennzeichnet, dass** der innere Kreislauf (27) des Einspritzkreislaufs (7) aus einer abgetrennten Ringkammer besteht, die sich zwischen der zentralen Öffnung (11) und der Zündkerze (8) befindet und mit dem Kanal (28) verbunden ist.

8. Vorrichtung gemäß Anspruch 6, **dadurch gekennzeichnet, dass** der innere Kreislauf (27) des Einspritzkreislaufs (7) aus einer Reihe von Kanälen (32) besteht, die in dem Zwischensockel (9) angebracht sind und auf einer Seite mit der Brennkammer (2) verbunden sind und auf der anderen Seite mit einer Verteilerkammer (31), die mit dem Kanal (28) in Verbindung steht.

9. Vorrichtung gemäß Anspruch 6, **dadurch gekennzeichnet, dass** der innere Kreislauf (27) des Einspritzkreislaufs (7) aus einer Rohrleitung besteht, die zur Brennkammer (2) führt und mit dem Kanal (28) verbunden ist, der seinerseits mit den Ausgängen der Einspritzventile in Verbindung steht, wobei die besagte Rohrleitung einen elektrischen Anschluss aufweist, um der Zündkerze (8) als Mittelelektrode zu dienen.

10. Vorrichtung gemäß einem der Ansprüche 6 bis 9, **dadurch gekennzeichnet, dass** der Kanal (28) ein Ende aufweist, an dem ein Düsenhalter (5) angebracht ist und der mit den Ausgängen (s₁, s₂) der Einspritzventile verbunden ist. Das gegenüberliegende Ende besitzt eine Dichtung (29), die sich zwischen dem Zwischensockel (9) und der Zündkerze (8) liegt.

11. Vorrichtung gemäß Anspruch 10, **dadurch gekennzeichnet, dass** der Düsenhalter (5) mit einem gesteuerten Einspritzventil (I₁) für Erdgaskraßstoff oder einem gesteuerten Binspzitaventil für Benzin oder flüssiges Propangas ausgestattet ist.

12. Vorrichtung gemäß einem der Ansprüche 1 bis 11, **dadurch gekennzeichnet, dass** sie Steuermöglichkeiten besitzt, mit denen bei jedem Verdichtungstakt und nach der Schließung der Lufteintrittsöffnung gesteuert werden können:
- Das Kraftstoffeinspritzventil, um Kraftstoff durch den Einspritzkreislauf in die Brennkammer (2) einströmen zu lassen, so dass zwischen dem Ende der Einspritzung und dem Zündzeitpunkt ein bestimmter Zeitraum liegt;
- Das Einspritzventil für das Spülgas, um während dieses Zeitraums mindestens einmal das Einströmen von Spülgas in den Einspritzkreislauf (7) zu gewährleisten, um so den Kraftstoff in die Brennkammer (2) zu drücken, damit er in dieser Kammer verbrannt werden kann.

13. Vorrichtung gemäß Anspruch 12, **dadurch gekennzeichnet, dass** die Steuerelemente das Einspritzen von Spülgas während der Kraftstoffeinspritzung ermöglichen, damit eine Vormischung vor dem Einströmen in die Brennkammer (2) stattfindet.

14. Vorrichtung gemäß Anspruch 12, **dadurch gekennzeichnet, dass** das Kraftstoffeinspritzventil (I₁) als Kraftstoff Erdgas einspritzt.

15. Vorrichtung gemäß Anspruch 12, **dadurch gekennzeichnet, dass** das Kraftstoffeinspritzventil (I₁) als Kraftstoff Benzin oder flüssiges Propangas einspritzt.

16. Vorrichtung gemäß Anspruch 12, **dadurch gekennzeichnet, dass** das Spülgas-Einspritzventil (I₂) als Spülgas Luft oder Abgase einspritzt.

17. Zylinderkopf eines Verbrennungsmotors, **dadurch gekennzeichnet, dass** er mit einer Vorrichtung gemäß einem der Ansprüche 1 bis 16 ausgestattet ist.

## Claims

1. Device for controlling the injection of a fuel inside a combustion chamber (2) of a internal combustion engine with controlled spark or diesel ignition, the combustion chamber (2) being equipped with at least one spark plug (8), **characterized by** that it contains:
- an adapter support (9) intended to be mounted on the motor's cylinder head (3), the adapter support being arranged so as to define both, at least partially, an injection circuit (7) for the fuel and also a central section (11) for attaching the spark plug (8),
- and at least one controlled injector (I1) for the fuel and a controlled injector (I2) for a rinsing gas, the controlled injectors being mounted on the outside of the combustion chamber so that their outlets (S1, S2) are located so as to be connected to the injection circuit inlet (7).

2. Device as in Claim 1, **characterized by** that the adapter support (9) has a threaded mounting part (9a) intended to fit a female thread (10) made in the cylinder head (3) and corresponding with the female thread for the thread of a traditional spark plug or with a female thread made in the mounting section of an injector for diesel.

3. Device as in Claim 2, **characterized by** that the adapter support (9) has a threaded part (9a) with a flange (21) mounted on it intended to be held by means of a sealing gasket (22), with the bottom (23) of a mounting hollow made in the cylinder head.

4. Device as in Claim 1, **characterized by** that the adapter support (9) contains a central section (11), with a female threaded part (13), to permit the mounting of the spark plug (8) by screwing.

5. Device as in Claim 1, **characterized by** that the adapter support (9) contains, in its part that opens into the combustion chamber, the earth electrode (17) of the spark plug (8).

6. Device as in Claim 1, **characterized by** that the injection circuit (7) contains an internal circuit (27) made in the adapter support (9) which is also in contact on one side with the combustion chamber (2) and, on the other side, with a duct (28) connected to the outlets (S1, S2) of the injectors.

7. Device as in Claim 6, **characterized by** that the internal circuit (27) of the injection circuit (7) comprises a circular chamber defined between the central section (11) and the spark plug (8) and connected to the duct (28).

8. Device as in Claim 6, **characterized by** that the internal circuit (27) of the injection circuit (7) consists of a series of channels (32) made in the adapter support (9) which is also in contact on one side with the combustion chamber (2) and on the other side with a plenum chamber (31) connected to the duct (28).

9. Device as in Claim 6, **characterized by** that the internal circuit (27) of the injection circuit (7) comprises a tubular conduit which opens into the combustion chamber (2) and which is connected to the duct (28) which is itself connected to the injector outlets, the said tubular conduit being electrically connected so as to form the central electrode of the spark plug (8).

10. Device as in any of Claims 6 to 9, **characterized by** that the duct (28) has one end mounted on a nozzle holder (5) and is connected to the outlets (S1, S2) of the injectors and at the opposite end on a seal plug (29) located between the adapter support (9) and the spark plug (8).

11. Device as in Claim 10, **characterized by** that the nozzle holder (5) is equipped with a controlled injector (I1) for fuel of natural gas type and/or with a controlled injector for petrol or liquid petroleum gas.

12. Device as in any of Claims 1 to 11, **characterized by** that it contains a means of control which allows, for each compression period and after the closer of an aperture for the intake of air, the control of:
- the fuel injector for injecting fuel into the combustion chamber (2) and through the injection circuit in such a way as to allow a set interval between the end of the injection of the fuel and the ignition point,
- the injector of the rinsing gas so as to ensure, at least during the time interval, the injection of the rinsing gas through the injection circuit (7) so as to evacuate the fuel and lead it into the combustion chamber (2) with the intention of causing its combustion in the said chamber.

13. Device as in Claim 12, **characterized by** that the means of control permit the control of the injection of the rinsing gas during the injection of the fuel so as to create a premix before introduction into the combustion chamber (2).

14. Device as in Claim 12, **characterized by** that that fuel injector (I1) injects natural gas as the fuel.

15. Device as in Claim 12, **characterized by** that that fuel injector (I1) injects petrol or liquid petroleum gas as the fuel.

16. Device as in Claim 12, **characterized by** that the rinsing gas injector injects air or exhaust gases for the rinse.

17. Cylinder head of a thermal engine, **characterized by** that it is equipped with a control device that conforms with one of Claims 1 to 16.
